# EUROPÄISCHE PATENTSCHRIFT

(11) **EP 2 022 315 B1**
(45) Veröffentlichungstag und Bekanntmachung des Hinweises auf die Patenterteilung: **16.06.2010**
(21) Anmeldenummer: 08103739.2
(22) Anmeldetag: 28.04.2008
(51) Int. Cl.: A01D 67/00, A01D 43/08

(54) **Selbstfahrender Feldhäcksler**
Self-propelled chaff cutter
Ramasseuse-hacheuse automobile

(30) Priorität: 31.07.2007 DE 102007036292
(43) Veröffentlichungstag der Anmeldung: 11.02.2009
(73) Patentinhaber: CLAAS Selbstfahrende Erntemaschinen GmbH, 33428 Harsewinkel (DE)
(72) Erfinder: Isfort, Heinrich, 48249 Dülmen (DE); Gersmann, Manfred, 48231 Warendorf (DE); Engenhorst, Werner, 33428 Harsewinkel (DE)

(56) Entgegenhaltungen:
- EP-A- 1 151 655
- DE-C- 75 665
- JP-A- 2003 267 274

## Beschreibung

Die vorliegende Erfindung bezieht sich auf einen selbstfahrenden Feldhäcksler. Basis jedes selbstfahrenden Feldhäckslers ist ein Fahrgestell, welches aus einem Maschinenrahmen gebildet wird. Der Maschinenrahmen ist Träger einzelner Komponenten, wobei der Anordnung der Komponenten am Maschinenrahmen eine wesentliche Rolle bzgl, des Wirkungsgrades des Feldhäckslers zukommt. Die unterhalb am Rahmen angeordneten Komponenten sind die Vorderachse und die Hinterachse, die jeweils mit Rädern ausgestattet sind, wobei die Vorderachse Träger der Antriebsräder, der Radgetriebe und eines Schaltgetriebes ist. Die Hinterachse ist Träger der Lenkräder und stützt mit den Vorderrädern gemeinsam den Rahmen gegen den Boden ab. Oberhalb des Rahmens befinden sich die sogenannten Aufbaukomponenten, bestehend aus Fahrerkabine, Maschinengehäuse und Einrichtungen zur Verarbeitung und Vorrichtungen zur Förderung des Erntegutes, sowie der Antriebseinheit, die sich auf dem Maschinenrahmen abstützt. Zwischen dem Rahmen befinden sich ein oder mehrere Behälter zur Aufnahme einer brennbaren Flüssigkeit. Die Anordnung der Komponenten zueinander bestimmt die Gewichtsverteilung und somit den Schwerpunkt des Feldhäckslers, wobei die Position des Schwerpunktes auch durch das vor der Vorderachse angeordnete Vorsatzgerät mitbestimmt wird und Einfluss auf die zulässige Achslast nimmt.

Selbstfahrende landwirtschaftliche Erntemaschinen, insbesondere Feldhäcksler und Mähdrescher mit großer Gesamtmasse, schwerem Vorsatzgerät und starrer Achse sind aus dem Stand der Technik hinreichend bekannt. Der Schwerpunkt ist konstruktiv festgelegt. Beim Wechseln unterschiedlicher Vorsatzgeräte, beispielsweise eines Mähdrescherschneidwerkes, eines Maisgebisses oder einer Pickup, kann sich der Schwerpunkt ungünstig verschieben.

Zur Lösung dieses Problems offenbart die DD 75 665 ein Fahrgestell für einen Feldhäcksler, welches aus drei selbstständigen Montagegruppen gebildet wird. Die Baugruppen bestehen aus einem Rahmen, einer Triebachse und einer Lenkachse, die miteinander durch lösbare Verbindungselemente verbunden sind. Mittels Verschiebung der Verbindungselemente können die drei Montagegruppen verschoben werden, wodurch eine Verlagerung des Maschinenschwerpunktes erreichbar ist.

Demgegenüber schlägt die EP 1 151 655 A1 vor, dass sämtliche Bestandteile der Erntemaschine in solch einer Anordnung zueinander stehen, dass der Schwerpunkt der betriebsbereiten Erntemaschine mit angebautem Vorsatzgerät in einem genau definierten Abstand hinter der Vorderachse und einer genau definierten Höhe zur Bodenebene gelegen ist.

Beide Lösungen aus der DD 75 665 und der EP 1 151 655 A1 besitzen aber den Nachteil des hohen konstruktiven Aufwandes, um einen optimalen Maschinenschwerpunkt realisieren zu können, Bei häufig wechselnden Vorsatzgeräten sind daher zusätzliche Ballastgewichte oder ein Verschieben der Verbindungselemente notwendig, um einen optimalen Schwerpunkt der Erntemaschine und somit einen beherrschbaren Fahrbetrieb zu ermöglichen. Solche Erntemaschinen können mittlerweile im Straßenverkehr eine Fahrgeschwindigkeit von bis zu 40 km/h erreichen, wobei jedoch aufgrund der hohen Gesamtmasse der Erntemaschine selbst und dem angebauten Vorsatzgerät, die Erntemaschine ohne zusätzliche Ballastgewichte nicht beherrschbar auf der Straße gefahren werden kann.

Der Erfindung liegt daher die Aufgabe zugrunde, einen selbstfahrenden Feldhäcksler der eingangs genannten Art zu schaffen, welcher die genannten Nachteile der bekannten Anordnungen aus dem Stand der Technik vermeidet und eine technische Lösung anzugeben, die es ermöglicht, trotz eines hohen Gesamtgewichtes und angebauten Vorsatzgerät und ohne Anbringung von zusätzlichen Ballastgewichten eine optimale Gewichtsverteilung des selbstfahrenden Feldhäckslers zu erreichen.

Erfindungsgemäß wird dieses Problem durch die kennzeichnenden Merkmale des Patentanspruchs 1 gelöst. Vorteilhafte Ausgestaltungen und Weiterbildungen der Erfindung ergeben sich aus den nachstehenden Unteransprüchen und den nachfolgenden Beschreibungen.

Indem die Antriebsachse des Feldhäckslers aus einem Mittelteil und jeweils rechts und links an dem Mittelteil starr angeflanschten Achsträgereinheiten gebildet ist, wobei jede Achsträgereinheit in Richtung Vorsatzgerät integrierte vorgeschobene Radgetriebe aufweist, wird einerseits der Achsabstand zwischen der Hinter- und Vorderachse der Antriebsräder vorteilhafterweise vergrößert und andererseits befinden sich die Antriebsräder näher am Vorsatzgerät, so das eine optimale Gewichtsverteilung der betriebsbereiten Erntemaschine erreicht wird.

Die erfindungsgemäße Antriebsachse der Erntemaschine bildet eine Baueinheit und wird aus drei Baugruppen zusammengesetzt. Eine Baugruppe besteht aus einem Mittelteil, wobei das Mittelteil aus einem Schaltgetriebe gebildet wird und somit Gegenstand der Antriebsachse ist und jeweils einer rechts und links an dem Mittelteil starr angeflanschten Baugruppe, welche jeweils eine Achsträgereinheit bilden. Jede Achsträgereinheit weist in Richtung Vorsatzgerät vorgeschobene Radgetriebe auf, wobei die rechts und links an das Schaltgetriebe angeflanschten Achsträgereinheiten bis auf wenige Details spiegelsymmetrisch ausgebildet sind.

Die Getriebeteile sind in einer Achsträgereinheit angeordnet, wobei die Achsträgereinheit aus einem Formkörper gebildet ist. Der Formkörper ist als einstückiger Gießformkörper in einem Formgebungsverfahren hergestellt. Der Gießformkörper bildet somit ein Gehäuse für die Achsträgereinheit, wobei das Gehäuse der Achsträgereinheit in seiner Außenkontur in etwa "L"- förmig ausgebildet ist. Durch die "L"- förmige Kontur des Gehäuses der Achsträgereinheit enthält der Formkörper erfindungsgemäß zwei Hohlräume, die miteinander verbunden sind, wobei der eine Hohlraum senkrecht zu dem anderen Hohlraum angeordnet ist.

Die Getriebeeinzelteile werden von dem einen Hohlraum aufgenommen, welcher den kurzen Schenkel des "L"- förmigen Gehäuses bildet und darin montiert. Dieser Teil des Gehäuses der Achsträgereinheit bildet das in Richtung des Vorsatzgeräts vorgeschobene Radgetriebe. Der andere Hohlraum des Gehäuses der Achsträgereinheit befindet sich im langen Schenkels des "L"- förmigen Gehäuses, der im weitesten Sinne einem zylindrischen Hohlkörper entspricht. Dieser zweite Hohlraum nimmt jedoch statt dem ersten vorgeschobenen Hohlraum die Antriebswelle des Radgetriebes bzw. die Abtriebswelle des Schaltgetriebes auf und bildet mit dem angeflanschten Schaltgetriebe eine Bezugslinie, wobei das Gehäuse mit dem zweiten Hohlraum einen Teil eines Achskörpers der Antriebsachse bildet

Werden beide Achskörper mit dem dazwischen liegenden Schaltgetriebe im Montageverfahren verschraubt, entsteht eine Baueinheit, welche die erfindungsgemäße Antriebsachse darstellt und aus drei selbstständigen Montagegruppen gebildet ist. Die drei Montagegruppen bestehen aus zwei Achsträgereinheiten und dem Schaltgetriebe mit Bremsen. Eine Montagegruppe umfasst beispielsweise die linke Achsträgereinheit, eine weitere Montagegruppe die rechte Achsträgereinheit und die dritte Montagegruppe umfasst das Schaltgetriebe mit den Bremsen. Aufgrund dieser rationellen Anordnung wird die Fertigung und Montage vereinfacht und dadurch eine Kostenreduzierung erreicht. Des weiteren führt die Kompaktheit der Baueinheit zu einer besseren Wärmeableitung und bewirkt einen größeren Staubschutz. Die durch die komplette Baueinheit gebildete erfindungsgemäße Antriebsachse für den Feldhäcksler weist jetzt, aufgrund der beiden rechts und links "L"- förmigen an das Schaltgetriebe angeflanschten Achsträgereinheiten mit vorgeschobenen Radgetrieben, eine "U"- Form bzw, gabelförmige Ausbildung auf. Diese "U"- Form bzw. gabelförmige Ausbildung entsteht dadurch, dass jeweils der kurze "L"- förmige Schenkel des Radgetriebes in Fahrtrichtung bzw. in Richtung des Vorsatzgerätes weist, wodurch die Antriebsräder nach vorne dicht an die Vorsatzgeräte geschoben werden. Durch diese Verschiebung der Antriebsräder ergibt sich eine günstigere Gewichtsverteilung.

In einer vorteilhaften Weiterbildung der Erfindung umfasst die "U" bzw, gabelförmig ausgebildete Antriebsachse ein als Häckselaggregat ausgeführtes Arbeitsorgan des Feldhäckslers, so dass dadurch die Vorderräder weiter nach vorn verschoben werden können.

Bezüglich der vorteilhaften Verteilung der Kräfte und Gewichte der Komponenten an dem Feldhäcksler, vor allem beim Einsatz von schweren Vorsatzgeräten, sind die gegen die starre Antriebsachse des Achskörpers um einen bestimmten Betrag vorgeschobenen Radgetriebe, auch um einen bestimmten Winkel gegenüber der Horizontalen, wobei die Horizontale parallel zum Maschinenrahmen in Längsrichtung gesehen verläuft, nach oben gedreht. Der Winkel gegenüber der Horizontalen der nach oben zeigenden Radgetriebe der starren Antriebsachse kann in etwa, je nach Ausführungsform der Antriebsachse, zwischen 10 Grad und 50 Grad, vorzugsweise 30 Grad betragen. Der Winkel um welchen das Radgetriebe nach oben gedreht ist, entspricht einem Drehwinkel, der durch die Mitte der Antriebsachse und der Horizontalen verläuft. Der Drehwinkel bestimmt somit die Höhe der um einen beabstandeten Achsversatz zur Antriebswelle angeordneten Abtriebswelle des Radgetriebes, gegenüber der Horizontalen,

Dadurch, das die Felge des Antriebsrades das vorgeschobene Radgetriebe umfasst, vergrößert sich der direkte innere Abstand zwischen den Radgetrieben, wodurch einerseits mehr Platz für das Arbeitsorgan zur Verfügung steht und andererseits das Arbeitsorgan näher an die starre Antriebsachse herangeführt werden kann.

Ein weiterer erfindungsgemäßer Vorteil ergibt sich durch die Anordnung des Achsversatzes zwischen der eigentlichen starren Achse, die durch die, die Achskörper beinhalteten Abtriebswellen des Schaltgetriebes und die Abtriebswelle in den vorgeschobenen Radgetrieben gebildet wird. Dadurch, dass das Antriebsrad gegenüber der eigentlichen starren Achse nach vorne versetzt ist, ist eine einfache Drehdurchführung an der jeweiligen Abtriebswelle des Radgetriebes bzw. Radwelle realisierbar. Dazu enthalten zwei Seitenwände des Radgetriebes Öffnungen, die sich parallel beabstandet gegenüberliegen und die Abtriebswelle mit entsprechenden Lager- und Dichtungsmittel aufnehmen. Zudem wird die Möglichkeit der Anbringung einer Reifendruckregelanlage begünstigt, so dass eine einfache Befüllung der Antriebsreifen erfolgen kann.

Zur Montage der erfindungsgemäßen Antriebsachse am Maschinenrahmen der Erntemaschine ist jeweils eine Achsträgereinheit mit einem integrierten Stützelement am Achsträgergehäuse im Bereich des zylindrischen Teils ausgestattet. Zur optimalen Aufnahme des Maschinenrahmens und des Arbeitsorgans enthält die dem Rahmen zugewandte Seite des zylindrischen Teils des Achskörpergehäuses Abflachungen.

Ein konkretes Ausführungsbeispiel der Erfindung ist in den Zeichnungen rein schematisch dargestellt und wird nachfolgend näher beschrieben. Es zeigen:
- Fig. 1: eine schematische eines Feldhäckslers mit der erfindungsgemäßen Antriebsachse
- Fig.2: eine perspektivische Darstellung der erfindungsgemäßen Antriebsachse.

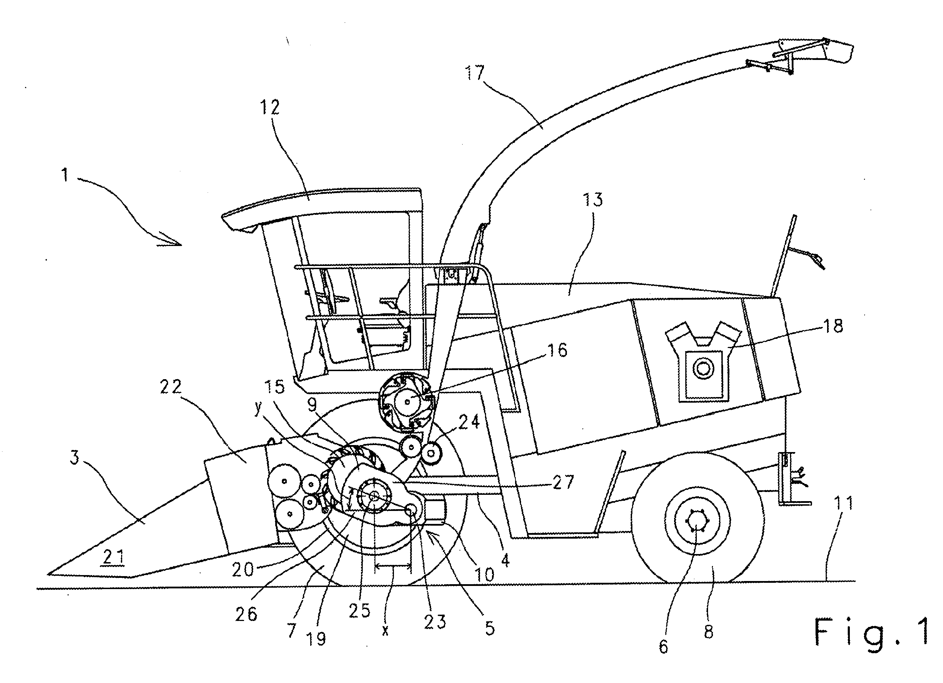

Die Fig.1 zeigt in schematischer Darstellung einen selbstfahrenden Feldhäcksler 1, welcher zur Aufnahme und zur Verarbeitung von Erntegutes dient.
Der Feldhäcksler 12 umfasst ein Fahrgestell, welches aus einem Maschinenrahmen 4 gebildet wird. Der Maschinenrahmen 4 ist Träger einzelner Komponenten, wobei der Anordnung der Komponenten am Maschinenrahmen 4 eine wesentliche Rolle bzgl, des Wirkungsgrades des Feldhäckslers 1 zukommt. Die unterhalb am Rahmen 4 angeordneten Komponenten sind die Vorderachse 5 und die Hinterachse 6, die jeweils mit Rädern 7,8 ausgestattet sind, wobei die Vorderachse 5 Träger der Antriebsräder 7, der Achsträgereinheiten 28 mit ausgebildeten Radgetrieben 9 und eines Schaltgetriebes 10 ist. Die Hinterachse 6, die bevorzugt als höhenbeweglich und gegenüber dem Maschinenrahmen 4 als federnd abgestützte Pendelachse 6 ausgebildet ist, ist Träger der Lenkräder 8 und stützt mit den Antriebsrädern 7 gemeinsam den Maschinenrahmen 4 gegen den Boden 11 ab. Oberhalb des Maschinenrahmens 4 befinden sich die sogenannten Aufbaukomponenten, bestehend aus der Fahrerkabine 12 und einem Maschinengehäuse 13. Einrichtungen zur Verarbeitung, beispielsweise die Gutbearbeitungseinrichtung 15, in Form eines Häckselaggregates 41, und Vorrichtungen zur Förderung des Erntegutes, beispielsweise ein Wurfgebläse 16 mit Auswurfschacht 17, sowie die Antriebseinheit 18, stützen sich ebenfalls auf dem Maschinenrahmen 4 ab.

Zwischen dem Rahmen befinden sich ein oder mehrere Behälter zur Aufnahme einer brennbaren Flüssigkeit. Die Anordnung der Komponenten zueinander bestimmt die Gewichtsverteilung und somit den Schwerpunkt des Feldhäckslers 1, wobei die Position des Schwerpunktes auch durch das vor der Vorderachse 5 angeordnete Vorsatzgerät 3 mitbestimmt wird und Einfluss auf die zulässige Achslast nimmt. Der dargestellte Feldhäcksler 1 umfasst somit eine Vielzahl von den, den Gesamtschwerpunkt der Erntemaschine 1 bestimmenden Komponenten, zu denen auch noch die Luftfiltervorrichtung, das Kühlaggregat und die Auspuffanlage zu nennen sind, wobei diese Komponenten in der Fig.1 nicht dargestellt sind. Sämtliche Bestandteile des Feldhäckslers 1 haben eine Anordnung zueinander, bei welcher der Schwerpunkt des betriebsbereiten Feldhäckslers 1 , einschließlich Vorsatzgerät 3, in Fahrtrichtung F in einem bestimmten Abstand hinter der Vorderachse 5 bzw. Antriebsachse 5 liegt. Der Abstand des Schwerpunktes zur Vorderachse 5 variiert aber in Abhängigkeit veränderlicher Größen, die Einfluss auf das Gewicht nehmen. Veränderliche Größen ergeben sich beispielsweise durch die Veränderung des Tankinhaltes, durch Wechsel des Erntegutes oder dessen Feuchtigkeitsgehalts und vor allem durch die unterschiedlichen Größen und Gewichte der Vorsatzgeräte 3. Daher ist sicherzustellen, dass ein bestimmter Abstand des Schwerpunktes zur Vorderachse 5 nicht unterschritten wird. Damit der variierende Schwerpunkt des Feldhäckslers 1 nicht einen kritische Bereich erreicht, der sich vor allem bei höheren Fahrgeschwindigkeiten nachteilig auswirkt, wird eine erfindungsgemäße Antriebsachse 5 mit vorgeschobenen Radgetrieben 9 eingesetzt. Die Radgetriebe 9 sind im Hohlraum 19 der Felgen 20 der Antriebsräder 7 integriert, wobei die Felgen 20 die vorgeschobenen Radgetriebe 9 umfassen, wodurch sich ein optimaler Freiraum zwischen den Radgetrieben 9 für die Gutbearbeitungseinrichtung 15 ergibt.

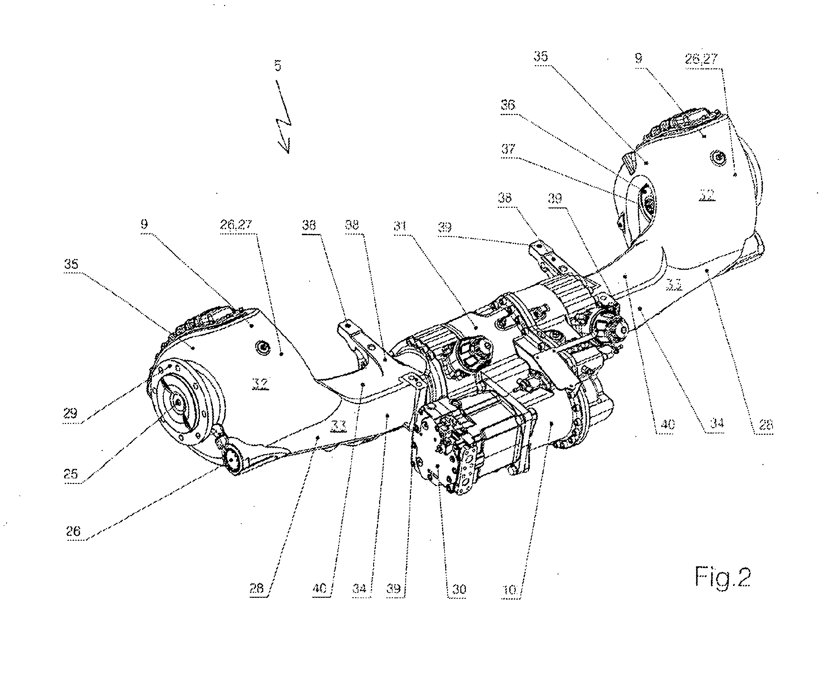

Die Gutbearbeitungseinrichtung 15 ist zwischen die vorgeschobenen Radgetriebe 9 positioniert, wodurch die Antriebsräder 7 näher an das Vorsatzgerät 3 rücken bzw, um den Betrag, der sich aus dem Abstand "X" ergibt. Der Abstand "X" ergibt sich aus dem fest vorgegebenen Abstand der Getriebewellen des Radgetriebes 9 uzw. der Antriebswelle 23 zu der Abtriebswelle 25, wobei die Antriebswelle 23 ungefähr die Mittenachse der Antriebsachse 5 bildet. Die Antriebs- 23 und die Abtriebswelle 25 sind durch das Gehäuse 27 des Formkörpers 26 der Achsträgereinheit 28 (siehe Fig.2) staubdicht umschlossen. Im inneren der starren Achsträgereinheit 28 ist die Antriebswelle 23 für das Radgetriebe 9 zentrisch gelagert, welche in nicht näher erläuterter Weise über die Radgetriebe 9, die auf den Antriebsflanschen 29 (siehe Fig.2) angeschraubten Antriebsräder 7 antreibt.

Die um einen bestimmten Betrag "X" vorgeschobenen Radgetriebe 9, weisen auch um einen bestimmten Betrag gegenüber der Horizontalen nach oben, wobei der bestimmte Betrag einem Winkel "Y" entspricht, der durch den erfindungsgemäß ausgebildeten Formkörper 26 vorgegeben wird. Der Winkel "Y" entspricht in etwa 30 Grad, wobei der eine Schenkel des Winkels "Y" durch die Horizontale gebildet wird und der andere Schenkel des Winkels "Y" die beiden Mittenachsen der Antriebs- 23 und Abtriebswelle 25 durchschneidet, wobei der Schnittpunkt der beiden Schenkel des Winkels "Y" in der Mitte der Antriebswelle 23 liegt. Die komplette starre Antriebsachse 5, bestehend aus ein Schaltgetriebe 10 bildenden Mittelteil 31 und jeweils rechts und links angeflanschten Achsträgereinheiten 28, zum Antrieb der Antriebsräder 7, ist näher der Fig.2 zu entnehmen.

Aus der Figur 2 ist in perspektivischer Ansicht die erfindungsgemäße starre Antriebsachse 5 dargestellt. Die Antriebsachse 5 besteht aus einer Baueinheit 30, welche aus drei Baugruppen gebildet wird. Eine Baugruppe 30 besteht dabei aus einem Mittelteil 31, wobei das Mittelteil 31 aus einem Schaltgetriebe 10 gebildet wird. Schaltgetriebe 10 sind aus dem Stand der Technik bekannt, sodass diese nicht näher erläutert werden müssen. Neu ist, dass das Schaltgetriebe 10 ein Bestandteil der starren Antriebsachse 5 ist. An dem Schaltgetriebe 10 sind jeweils rechts und links zwei weitere Baugruppen, bestehend aus den Achsträgereinheiten 28, angeflanscht. Die Achsträgereinheiten 28 weisen in Richtung des Vorsatzgerätes 3 vorgeschobene Radgetriebe 9 auf, wobei die komplette Antriebsachse 5 eine u-förmige bzw. gabelförmige Ausbildung aufweist. Die rechte und linke Achsträgereinheit 28 sind bis auf wenige Details spiegelsymmetrisch ausgebildet. Jede Achsträgereinheit 28 stellt einen Formkörper 26 dar, der ein Gehäuse 27 bildet, welches eine "L"- förmige Kontur aufweist. Das Gehäuse 27 einer Achsträgereinheit 28 enthält zwei Hohlräume 32,33. Die Hohlräume 32,33 sind jeweils senkrecht zueinander angeordnet, wobei der Hohlraum 32 die Getriebeteile (nicht dargestellt) aufnimmt und der Hohlraum 33 die vom Schaltgetriebe 10 kommende Antriebswelle 23 für das Radgetriebe 9 enthält. Der eine Hohlraum 32 der Achsträgereinheit 28 bildet im Achskörper 34 das vorgeschobene Radgetriebe 9, während der andere Hohlraum 33 der Achsträgereinheit 28 den Bereich des Achskörpers 34 zum Anschluss an das Schaltgetriebe 10 bildet. Die Seitenwände 35 der Radgetriebe 9 enthalten Öffnungen 36 zur Aufnahme einer Drehdurchführung 37, welche die Abtriebswelle 25, an deren Ende ein Antriebsflansch 29 zur Aufnahme der Felge 20 des Antriebsrades 7 befestigt ist, zentrisch aufnimmt. Die Abtriebswelle 25 verläuft dabei parallel zur Antriebswelle 23, wobei die innen- und außenliegenden Öffnung 37 nach der Montage der Getriebeteile staubdicht verschlossen werden. Zur Montage der Antriebsachse 5 am Maschinenrahmen 4, ist der Formkörper 26 am Gehäuse 27 mit Stützelementen 38 ausgestattet, wobei die Stützelemente 38 beidseitig des Achskörpers 34 um den Bereich des Hohlraumes 33 angeordnet sind und einen Teil der Achsträgereinheit 28 bilden. Die planen Aufnahmeflächen 38 verlaufen parallel zu den unteren planen Flächen (nicht dargestellt) des Maschinenrahmens 4 und sind somit horizontal und parallel versetzt zum Schenkel des Winkels "Y" angeordnet. Die Aufnahmeflächen38 sind in Richtung des Vorsatzgerätes 3 länglich ausgebildet und verjüngen sich zum Ende hin und dienen zur Aufnahme des nicht dargestellten Häckselaggregates, so dass ein zusätzliches Aufnahmeelement am Maschinenrahmen nicht erforderlich ist. Auf der dem Maschinenrahmen 4 zugewandten Seite weist die Oberfläche des Achskörpers 34 der Achsträgereinheit 28 Abflachungen 40 auf, welche im Gesamtkonzept der Antriebsachse 5 einen Beitrag zur Nutzung der räumlichen Erfordernisse für den Maschinenrahmen 4 und der Gutbearbeitungseinrichtung 15 erzielen.

Es liegt im Rahmen des Könnens eines Fachmanns das beschriebene Ausführungsbeispiel in nicht dargestellter Weise abzuwandeln, um die beschriebenen Effekte zu erzielen, ohne dabei den Rahmen der Erfindung zu verlassen.

### Bezugszeichenliste:

- 1: Feldhäcksler
- 3: Vorsatzgerät
- 4: Maschinenrahmen
- 5: Antriebsachse
- 6: Hinterachse
- 7: Antriebsräder
- 8: Lenkräder
- 9: Radgetriebe
- 10: Schaltgetriebe
- 11: Boden
- 12: Fahrerkabine
- 13: Maschinengehäuse
- 15: Gutbearbeitungseinrichtung
- 16: Wurfgebläse
- 17: Auswurfschacht
- 18: Antriebseinheit
- 19: Hohlraum
- 20: Felge
- 21: Schneidwerk
- 22: Guteinzugsvorrichtung
- 23: Antriebswelle
- 24: Comcracker
- 25: Abtriebswelle
- 26: Formkörper
- 27: Gehäuse
- 28: Achsträgereinheit
- 29: Antriebsflansch
- 30: Baueinheit
- 31: Mittelteil
- 32: Hohlraum
- 33: Hohlraum
- 34: Achskörper
- 35: Seitenwände
- 36: Öffnung
- 37: Drehdurchführung
- 38: Stützelemente
- 39: Flächen
- 40: Abflachungen

- F: Fahrtrichtung

## Patentansprüche

1. Selbstfahrender Feldhäcksler (1), welcher mit einem Vorsatzgerät (3) ausgestattet ist und welcher mit einer starren Achse (5), einem Schaltgetriebe (10) und zwei, den Antriebsrädern (7) vorgeschalteten, mit dem Schaltgetriebe (10) antriebstechnisch gekoppelten Radgetrieben (9), ausgebildet ist, **dadurch gekennzeichnet, dass** die Antriebsachse (5) aus einem Mittelteil (31) und jeweils rechts und links an dem Mittelteil (31) starr angeflanschte Achsträgereinheiten (28) gebildet ist, wobei jede Achsträgereinheit (28) in Richtung Vorsatzgerät (3) vorgeschobene Radgetriebe (9) aufweist.

2. Selbstfahrender Feldhäcksler (1), nach Anspruch 1, **dadurch gekennzeichnet, dass** das Mittelteil (31) aus einem Schaltgetriebe (10) gebildet ist.

3. Selbstfahrender Feldhäcksler nach mindestens einem der vorhergehenden Ansprüche, **dadurch gekennzeichnet, dass** jede Achsträgereinheit (28) aus einem Formkörper (26) gebildet ist.

4. Selbstfahrender Feldhäcksler (1) nach mindestens einem der vorhergehenden Ansprüche, **dadurch gekennzeichnet, dass** jeder Formkörper ein Gehäuse (27) für die Achsträgereinheit (28) bildet.

5. Selbstfahrender Feldhäcksler (1), nach mindestens einem der vorhergehenden Ansprüche, **dadurch gekennzeichnet, dass** das Gehäuse (27) der Achsträgereinheit (28) eine "L"- förmige Kontur aufweist und zwei Hohlräume (32,33) enthält, die miteinander verbunden sind und senkrecht zueinander angeordnet sind.

6. Selbstfahrender Feldhäcksler (1), nach Anspruch 5
**dadurch gekennzeichnet, dass** ein Hohlraum (32) die Getriebeeinzelteile aufnimmt und das vorgeschobene Radgetriebe (9) bildet.

7. Selbstfahrender Feldhäcksler (1) nach Anspruch 5 oder 6,
**dadurch gekennzeichnet, dass** ein Hohlraum (33) die Antriebswelle (23) des Radgetriebes (9) aufnimmt und einen Teil eines Achskörpers (34) bildet.

8. Selbstfahrender Feldhäcksler (1) nach mindestens einem der vorhergehenden Anspruche, **dadurch gekennzeichnet, dass** die Antriebsachse (5) eine Baueinheit (30) bildet, die aus drei Montagegruppen zusammengesetzt wird.

9. Selbstfahrender Feldhäcksler (1) nach Anspruch 8,
**dadurch gekennzeichnet, dass** die Montagegruppen aus zwei Achsträgereinheiten (28) und einem Schaltgetriebe (10) mit Bremsen besteht.

10. Selbstfahrender Feldhäcksler (1) nach mindestens einem der vorhergehenden Ansprüche, **dadurch gekennzeichnet, dass** die komplettierte Antriebsachse (5) eine u-förmige bzw. gabelförmige Ausbildung aufweist.

11. Selbstfahrender Feldhäcksler (1) nach mindestens einem der vorhergehenden Ansprüche, **dadurch gekennzeichnet, dass** die u-förmig bzw. gabelförmig ausgebildete Antriebsachse (5) eine Gutbearbeitungseinrichtung (15) umfasst.

12. Selbstfahrender Feldhäcksler (1) nach mindestens einem der vorhergehenden Ansprüche, **dadurch gekennzeichnet, dass** die Gutbearbeitungseinrichtung (15) ein Häckselaggregat (41) ist.

13. Selbstfahrender Feldhäcksler (1) nach mindestens einem der vorhergehenden Ansprüche, **dadurch gekennzeichnet, dass** die Abtriebswelle des Radgetriebes (9) um einen bestimmten Abstand (X) gegenüber der Antriebswelle (23) versetzt ist.

14. Selbstfahrender Feldhäcksler (1) nach mindestens einem der vorhergehenden Ansprüche, **dadurch gekennzeichnet, dass** ein vorgeschobenes Radgetriebe (9) um die Mitte der Antriebsachse (5) gegenüber der Horizontalen um einen bestimmten Winkel (Y) nach oben weist.

15. Selbstfahrender Feldhäcksler (1) nach mindestens einem der vorhergehenden Ansprüche, **dadurch gekennzeichnet, dass** das vorgeschobene Radgetriebe (9) von der Felge (20) des Antriebsrades (7) umfasst wird.

16. Selbstfahrender Feldhäcksler (1) nach mindestens einem der vorhergehenden Ansprüche, **dadurch gekennzeichnet, dass** das Radgetriebe (9) in den Seitenwänden (35) Öffnungen (36) für eine Drehdurchführung (37) enthält.

17. Selbstfahrender Feldhäcksler (1) nach mindestens einem der vorhergehenden Ansprüche, **dadurch gekennzeichnet, dass** die Achsträgereinheit (28) Abflachungen (38) zur Aufnahme einer Gutbearbeitungseinrichtung (15) aufweist.

## Claims

1. A self-propelled forage harvester (1) which is equipped with a front-mounted implement (3) and which has a rigid axle (5), a shift transmission (10) and two wheel transmissions (9) which are disposed upstream of the drive wheels (7) and which are drivingly coupled to the shift transmission (10), **characterised in that** the drive axle (5) is formed from a central portion (31) and axle carrier units (28) rigidly flange-mounted respectively to the right and the left on the central portion (31), wherein each axle carrier unit (28) has wheel transmissions (9) that are extended forwardly in a direction towards the front-mounted implement (3).

2. A self-propelled forage harvester (1) according to claim 1 **characterised in that** the central portion (31) is formed from a shift transmission (10).

3. A self-propelled forage harvester (1) according to one of the preceding claims **characterised in that** each axle carrier unit (28) is formed from a shaped body (26).

4. A self-propelled forage harvester (1) according to at least one of the preceding claims **characterised in that** each shaped body forms a housing (27) for the axle carrier unit (28).

5. A self-propelled forage harvester (1) according to at least one of the preceding claims **characterised in that** the housing (27) of the axle carrier unit (28) is of an L-shaped contour and includes two cavities (32, 33) which are connected together and are arranged perpendicularly to each other.

6. A self-propelled forage harvester (1) according to claim 5 **characterised in that** a cavity (32) accommodates the individual transmission parts and forms the forwardly extended wheel transmission (9).

7. A self-propelled forage harvester (1) according to claim 5 or claim 6 **characterised in that** a cavity (33) accommodates the drive shaft (23) of the wheel transmission (9) and forms a part of an axle body (34).

8. A self-propelled forage harvester (1) according to at least one of the preceding claims **characterised in that** the drive axle (5) forms a structural unit (30) composed of three assembly groups.

9. A self-propelled forage harvester (1) according to claim 8 **characterised in that** the assembly groups comprise two axle carrier units (28) and a shift transmission (10) with brakes.

10. A self-propelled forage harvester (1) according to at least one of the preceding claims **characterised in that** the complete drive axle (5) is of a u-shaped or forked configuration.

11. A self-propelled forage harvester (1) according to at least one of the preceding claims **characterised in that** the drive axle (5) of a u-shaped or forked configuration includes a material processing device (15).

12. A self-propelled forage harvester (1) according to at least one of the preceding claims **characterised in that** the material processing device (15) is a chopping assembly (41).

13. A self-propelled forage harvester (1) according to at least one of the preceding claims **characterised in that** the drive output shaft of the wheel transmission (9) is displaced by a given spacing (X) with respect to the drive shaft (23).

14. A self-propelled forage harvester (1) according to at least one of the preceding claims **characterised in that** a forwardly extended wheel transmission (9) faces upwardly about the centre of the drive axle (5) with respect to the horizontal through a given angle (Y).

15. A self-propelled forage harvester (1) according to at least one of the preceding claims **characterised in that** the forwardly advanced wheel transmission (9) is enclosed by the rim (20) of the drive wheel (7).

16. A self-propelled forage harvester (1) according to at least one of the preceding claims **characterised in that** the wheel transmission (9) includes openings (36) in the side walls (35) for a rotary pass-through transmission (37).

17. A self-propelled forage harvester (1) according to at least one of the preceding claims **characterised in that** the axle carrier unit (28) has flat portions (38) for receiving a material processing device (15).

## Revendications

1. Ensileuse automotrice (1) qui est équipée d'un outil frontal (3) et qui comporte un essieu rigide (5), une boîte de vitesses (10) et deux transmissions de roues (9) disposées en amont des roues motrices (7) et couplées à la boîte de vitesses (10) sur le plan de l'entraînement, **caractérisée en ce que** l'essieu moteur (5) est formé d'une partie centrale (31) et d'unités porte-essieu (28) bridées de manière rigide sur la partie centrale (31) à droite et à gauche de celle-ci, chaque unité porte-essieu (28) comportant une transmission de roue (9) avancée en direction de l'outil frontal (3).

2. Ensileuse automotrice (1) selon la revendication 1, **caractérisée en ce que** la partie centrale (31) est constituée par une boîte de vitesses (10).

3. Ensileuse automotrice selon au moins une des revendications précédentes, **caractérisée en ce que** chaque unité porte-essieu (28) est constituée par un corps moulé (26).

4. Ensileuse automotrice (1) selon au moins une des revendications précédentes, **caractérisée en ce que** chaque corps moulé forme un carter (27) pour l'unité porte-essieu (28).

5. Ensileuse automotrice (1) selon au moins une des revendications précédentes, **caractérisée en ce que** le carter (27) de l'unité porte-essieu (28) présente un contour en forme de L et renferme deux cavités (32, 33) qui sont reliées l'une à l'autre et sont disposées perpendiculairement l'une à l'autre.

6. Ensileuse automotrice (1) selon la revendication 5, **caractérisée en ce qu'**une cavité (32) reçoit les éléments constitutifs de la transmission et forme la transmission de roue avancée (9).

7. Ensileuse automotrice (1) selon la revendication 5 ou 6, **caractérisée en ce qu'**une cavité (33) reçoit l'arbre d'entraînement (23) de la transmission de roue (9) et forme une partie d'un corps d'essieu (34).

8. Ensileuse automotrice (1) selon au moins une des revendications précédentes, **caractérisée en ce que** l'essieu moteur (5) forme une unité structurelle (30) qui est constituée de trois sous-groupes.

9. Ensileuse automotrice (1) selon la revendication 8, **caractérisée en ce que** les sous-groupes sont constitués de deux unités porte-essieu (28) et d'une boîte de vitesses (10) avec freins.

10. Ensileuse automotrice (1) selon au moins une des revendications précédentes, **caractérisée en ce que** l'essieu moteur complet (5) présente une conformation en U, respectivement en fourche.

11. Ensileuse automotrice (1) selon au moins une des revendications précédentes, **caractérisée en ce que** l'essieu moteur conformé en U, respectivement en fourche (5) comprend un dispositif de traitement de produit récolté (15).

12. Ensileuse automotrice (1) selon au moins une des revendications précédentes, **caractérisée en ce que** le dispositif de traitement de produit récolté (15) est un organe hacheur (41).

13. Ensileuse automotrice (1) selon au moins une des revendications précédentes, **caractérisée en ce que** l'arbre de sortie de la transmission de roue (9) est décalé d'une distance déterminée (X) par rapport à l'arbre d'entraînement (23).

14. Ensileuse automotrice (1) selon au moins une des revendications précédentes, **caractérisée en ce qu'**une transmission de roue avancée (9) est tournée vers le haut, autour du centre de l'essieu moteur (5), selon un angle déterminé (Y) par rapport à l'horizontale.

15. Ensileuse automotrice (1) selon au moins une des revendications précédentes, **caractérisée en ce que** la transmission de roue avancée (9) est entourée par la jante (20) de la roue motrice (7).

16. Ensileuse automotrice (1) selon au moins une des revendications précédentes, **caractérisée en ce que** la transmission de roue (9) est pourvue, dans les parois latérales (35), d'ouvertures (36) pour un passage tournant (37).

17. Ensileuse automotrice (1) selon au moins une des revendications précédentes, **caractérisée en ce que** l'unité porte-essieu (28) comporte des méplats (38) pour recevoir un dispositif de traitement de produit récolté (15).
